# EUROPEAN PATENT APPLICATION

(11) **EP 3 686 639 A1**
(43) Date of publication of application: **29.07.2020**
(21) Application number: 18858118.5
(22) Date of filing: 20.09.2018
(51) Int. Cl.: G02B 6/44

(54) **OPTICAL FIBER CABLE**

(30) Priority: 21.09.2017 JP 2017181585
(71) Applicant: Sumitomo Electric Industries, Ltd., Osaka-shi, Osaka 541-0041 (JP)
(72) Inventor: ISHIKAWA, Hiroki, Osaka-shi, Osaka 541-0041 (JP); SATO, Fumiaki, Osaka-shi, Osaka 541-0041 (JP); OKA, Ryoei, Osaka-shi, Osaka 541-0041 (JP); KAWAGUCHI,Yuki, Osaka-shi, Osaka 541-0041 (JP); IDA, Sotaro, Osaka-shi, Osaka 541-0041 (JP)
(74) Representative: Hoffmann Eitle
(86) International application number: PCT/JP2018/034725
(87) International publication number: WO 2019/059251

(57) **Abstract**

An optical fiber cable includes: optical fiber units obtained by collecting a plurality of optical fiber ribbons in which a plurality of optical fibers are arranged in parallel; and a slot rod including a plurality of slot grooves formed in a spiral shape in order to store the optical fiber units. The optical fiber units are stranded in a longitudinal direction of the optical fiber cable in a state in which the optical fiber ribbons are not twisted, and the optical fiber units are stored in the longitudinal direction of the optical fiber cable in a state of being untwisted stranding in the slot grooves.

## Description

### TECHNICAL FIELD

The present disclosure relates to an optical fiber cable.

This application is based upon and claims the benefit of priority from Japanese Patent Application No. 2017-181585, filed September 21, 2017, the entire contents of which are incorporated herein by reference.

### BACKGROUND ART

Patent Literature 1 discloses an optical cable in which optical fibers are stored in a state of being twisted into a slot groove. Patent Literature 2 discloses an optical fiber cable in which optical fibers fixed by an intermittent fixing portion are stored in a state of being densely collected in a bundle and being twisted into slot grooves in a spiral shape.

### CITATION LIST

### PATENT LITERATURE

Patent Literature 1: JP-A-2007-108424
Patent Literature 2: JP-A-2011-100115

### SUMMARY OF INVENTION

An optical fiber cable according to an aspect of the present disclosure is an optical fiber cable including:
optical fiber units obtained by collecting a plurality of optical fiber ribbons in which a plurality of optical fibers are arranged in parallel; and a slot rod including a plurality of slot grooves formed in a spiral shape in order to store the optical fiber units,
in which the optical fiber units are stranded in a longitudinal direction of the optical fiber cable in a state in which the optical fiber ribbons are not twisted, and
the optical fiber units are stored in the longitudinal direction of the optical fiber cable in a state of being untwisted stranding in the slot grooves.

### BRIEF DESCRIPTION OF DRAWINGS

Fig. 1 is a cross-sectional view of an optical fiber cable according to a first embodiment.
Fig. 2 is a schematic view illustrating a state in which optical fiber ribbons are stranded in a primary unit not to be twisted.
Fig. 3 is a schematic view illustrating a state in which the primary units are stranded while being untwisted stranding.
Fig. 4 is a schematic view illustrating a state in which a secondary unit is stored in a slot groove in a state of being untwisted stranding.
Fig. 5 is a schematic view illustrating a state in which one primary unit is not twisted and stored in a slot groove.
Fig. 6 is a plan view illustrating an example of an intermittent connection type optical fiber ribbon.
Fig. 7 is a cross-sectional view taken along line A-A of Fig. 6.
Fig. 8 is a diagram illustrating an example of a mechanism for manufacturing an optical fiber unit.
Fig. 9 is a schematic view of a cage of Fig. 8 viewed from the front side.
Fig. 10 is a diagram illustrating another example of the mechanism for manufacturing the optical fiber unit.
Fig. 11 is a schematic view of a cage of Fig. 10 viewed from the front side.
Fig. 12 is a diagram illustrating an example of a manufacturing apparatus of the optical fiber cable.
Fig. 13 is a schematic view illustrating a state in which the plurality of primary units are not twisted and stored while positions in the slot groove are changed.
Fig. 14 is a cross-sectional view of an optical fiber cable according to a second embodiment.
Fig. 15 is a schematic view illustrating a state in which a plurality of secondary units are not twisted and stored while positions in a slot groove are changed.
Fig. 16 is a diagram illustrating an example of a manufacturing apparatus of the optical fiber cable illustrated in Fig. 14.

### DESCRIPTION OF EMBODIMENTS

### TECHNICAL PROBLEM

In an optical fiber cable including a slot rod including a plurality of slot grooves, it is known that optical fibers is stored in a twisted state in the slot groove in order to increase the density of the optical fiber cable (See Patent Literatures 1 and 2). In this case, it is desirable to form an optical fiber unit in which a certain number of fibers are stranded in order to identify the optical fibers stored in the slot groove.

However, when optical fiber units in which optical fibers are stranded in a slot groove are stored, in a case where large twisted distortion remains in the optical fibers, the optical fibers may be released from the slot groove, and there is a concern that deterioration of the transmission characteristics or a fiber break occurs. As a countermeasure thereof, the slot groove may be deepened so that the deterioration of the transmission characteristics or the fiber break does not occur, but in that case, an outer diameter of the optical fiber cable increases.

Therefore, an object of the present disclosure is to provide an optical fiber cable that can suppress deterioration of transmission characteristics or a fiber break and can reduce the diameter.

### ADVANTAGEOUS EFFECTS OF DISCLOSURE

According to the present disclosure, it is possible to suppress deterioration of transmission characteristics or fiber break and reduce the diameter.

### (Description of the embodiment of the present disclosure)

First, embodiments of the present disclosure are listed and described.

An optical fiber cable according to an aspect of the present disclosure is
(1) an optical fiber cable including: optical fiber units obtained by collecting a plurality of optical fiber ribbons in which a plurality of optical fibers in parallel are arranged; and a slot rod including a plurality of slot grooves formed in a spiral shape in order to store the optical fiber units,
   in which the optical fiber units are stranded in a longitudinal direction of the optical fiber cable in a state in which the optical fiber ribbons are not twisted, and
   the optical fiber units are stored in the longitudinal direction of the optical fiber cable in a state of being untwisted stranding in the slot grooves.
   According to the configuration, the optical fiber units are stranded in the longitudinal direction of the optical fiber cable, in a state in which the optical fiber ribbons are not twisted. Accordingly, it is possible to prevent the optical fibers from being crossed and twisted with each other, and thus twist and distortion do not occur in the optical fiber. Accordingly, the optical fibers do not outwardly spread, and the deterioration of the transmission characteristics or the fiber break can be suppressed.
   Since the optical fiber units are stored in a slit groove formed in a spiral shape in a state of being untwisted stranding, the entire optical fiber units are not twisted. Therefore, even when the slot groove is not deepened, it is possible to prevent the optical fiber units from being released from the slot groove, and the deterioration of the transmission characteristics or the fiber break can be suppressed, and thus the diameter of the optical fiber cable can be reduced.
(2) The optical fiber units may be configured with secondary units obtained by collecting a plurality of primary units obtained by collecting the plurality of optical fiber ribbons,
   the primary units may be stranded in the longitudinal direction of the optical fiber cable in a state in which the optical fiber ribbons are not twisted, and
   the secondary units may be stranded in the longitudinal direction of the optical fiber cable in a state in which the plurality of primary units are not twisted.
   According to the configuration, by causing the primary units and the secondary units to be in a state of being untwisted stranding in the longitudinal direction of the optical fiber cable, the optical fibers and the primary units can be respectively prevented from being twisted with each other, and twist and distortion do not occur in the optical fibers.
(3) A plurality of optical fiber units may be stored in the slot grooves.
   According to the configuration, by storing the plurality of optical fiber units in one slot groove, a larger number of optical fiber ribbons can be easily stored, and it is advantageous to reduce the diameter of the optical fiber cable.
(4) The plurality of optical fiber units stored in the slot grooves may be stored in the longitudinal direction of the optical fiber cable while positions in the slot grooves are changed.
   When the positions of the optical fiber units in the slot groove are not changed, a unit on the upper side of the slot groove is stored while drawing a longer trajectory than a unit on the bottom side of the slot groove. For this reason, the unit on the upper side of the slot groove is required to be formed to be longer than the optical fiber unit on the bottom side. In order to cause the unit to be longer, it is required that the optical fiber unit of which the length is changed according to the position (the upper side, the bottom side, or the like) in the slot groove is prepared in advance and arranged in a position therefor in an assembly (storing in the slot groove) process. Therefore, the manufacturing process becomes complicated. Also, there is a concern that a discard loss of discarding the optical fiber unit for the extra length is generated.
   In contrast, when the plurality of optical fiber units stored in the same slot groove are stored in the longitudinal direction of the optical fiber cable while the positions are switched, the length becomes can be equalized, so that the above phenomenon does not occur. Therefore, the complexity of the manufacturing process caused by the preparation of the optical fiber units with changing of the lengths or the increase of the manufacturing cost due to the increase of the discard loss of the optical fiber units can be suppressed.
(5) The plurality of optical fiber units stored in the slot grooves may be stranded and stored in the slot grooves in the longitudinal direction of the optical fiber cable, while a strand direction is periodically changed.
   According to the configuration, causing the optical fiber units to be stranded with each other and stored in the slot groove while the strand direction is periodically changed can be realized, for example, by providing a perforated plate that rotates before the gathering plate and assembling the perforated plate while being reversed and rotated in a range of ±90° from a neutral position. Accordingly, it is not necessary to rotate a cage accommodating a supply bobbin that supplies the optical fiber unit and thus the cost of the manufacturing equipment can be reduced.
(6) The optical fiber ribbons may be intermittent connection type optical fiber ribbons in which connecting portions in which the adjacent optical fibers are connected to each other and non-connecting portions in which the adjacent optical fibers are not connected to each other are provided intermittently in the longitudinal direction among some or all of the optical fibers in a state in which the plurality of optical fibers are arranged in parallel.
   According to the configuration, when the intermittent connection type optical fiber ribbons are stored in the slot groove, the shape in the slot groove cross section can be freely changed, and thus the space in the slot groove can be effectively utilized. Therefore, the optical fiber cable can be caused to be denser than in a case where the optical fiber ribbons are not the intermittent connection type.
(7) An outer diameter of the optical fiber may be 125 µm to 190 µm.
   According to the configuration, by reducing the diameter than that of general optical fibers (outer diameter of 250 µm), the optical fibers can be stored in the optical fiber cable with high density.
(8) An outer diameter of a clad of the optical fiber may be 80 µm to 120 µm.
   When the optical fibers are thinly covered, the deterioration of the transmission characteristics or the fiber break of the optical fiber cable easily occurs due to the adhesion of foreign matters. As described above, by reducing the outer diameter of the clad, the diameter of the optical fiber can be reduced while the coating thickness is secured.
(9) When the optical fibers are wound with a tension of 8 N around a bobbin obtained by winding sandpaper of #240 on a body surface having a body diameter of 280 mm, an increase in loss may be 5 dB/km or less.

When the diameter of the optical fiber is reduced, the optical fibers in the optical fiber cable are easily bent, and thus the transmission characteristics are easily deteriorated. By using the optical fiber satisfying the above condition, the deterioration of the transmission characteristics is suppressed to realize the optical fiber cable with high density.

### (Details of embodiment of present disclosure)

Specific examples of an optical fiber cable according to the embodiment of the present disclosure are described with reference to drawings.

The present disclosure is not limited to these examples, but is indicated by the claims, and is intended to include meanings equivalent to the claims and all modifications within the scope.

### (First embodiment)

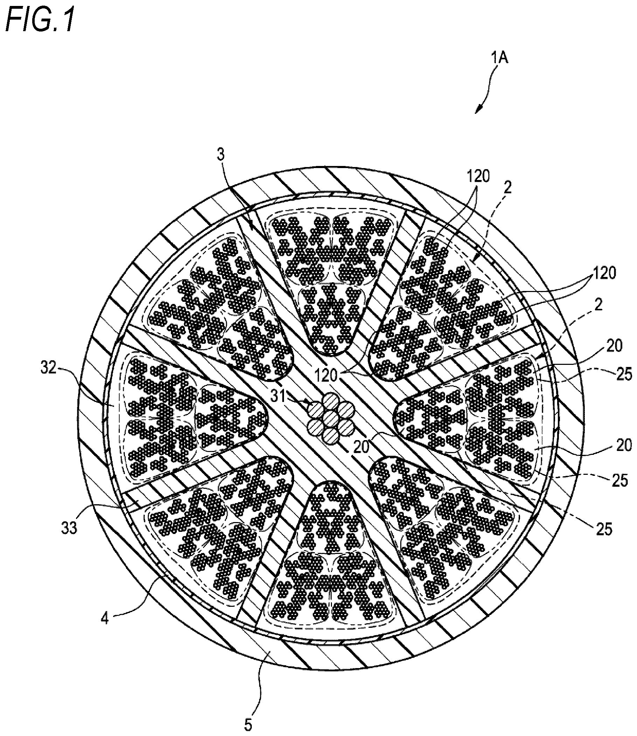

Fig. 1 is a cross-sectional view illustrating an example of an optical fiber cable according to the first embodiment. As illustrated in Fig. 1, an optical fiber cable 1A of the first embodiment includes optical fiber units 2 obtained by collecting a plurality of optical fiber ribbons 120, a slot rod 3 that stores the optical fiber units 2, a press-wrapping tape 4 that wraps a periphery of the slot rod 3, and a jacket 5 that covers an outer side of the slot rod 3.

In the slot rod 3, tensile strength members 31 are embedded in the center, and a plurality (eight in this example) of slot grooves 32 for storing the optical fiber units 2 are formed on the outer peripheral surface. The slot rod 3 is formed of a resin material such as plastic.

For example, the tensile strength members 31 are formed of a plurality (seven in this example) of wires (for example, steel wires or fiber reinforced plastic wires) having a resistance to tension and compression. The tensile strength members 31 are provided in the longitudinal direction with respect to the optical fiber cable 1A.

The eight slot grooves 32 are formed, for example, in a spiral shape in one direction along the longitudinal direction of the optical fiber cable 1A. Each slot groove 32 is partitioned by slot ribs 33 extending in a radial shape from the periphery of the tensile strength members 31. The cross section of the slot groove 32 has a substantially U shape.

The press-wrapping tape 4 vertically or horizontally wraps the periphery of the slot rod 3 so that the optical fiber units 2 do not release from the slot grooves 32. The press-wrapping tape 4 is formed of, for example, a nonwoven fabric formed in a tape shape.

The jacket 5 is formed of, for example, polyethylene (PE) or polyvinyl chloride (PVC).

The optical fiber units 2 in the present example are formed as secondary units obtained by collecting a plurality (three in the present example) of primary units 20 obtained by collecting the plurality (twelve in the present example) of optical fiber ribbons 120. The number of the optical fiber ribbons 120 collected in one primary unit 20 may be 2 or more. When the secondary unit is configured with a plurality of primary units, the number of the primary units 20 collected in one secondary unit (optical fiber unit) 2 may be 2 or more.

The twelve optical fiber ribbons 120 included in each primary unit 20 are gathered to be assembled, and the optical fiber ribbons 120 are not twisted in the longitudinal direction of the optical fiber cable 1A and stranded in a spiral shape of one direction.

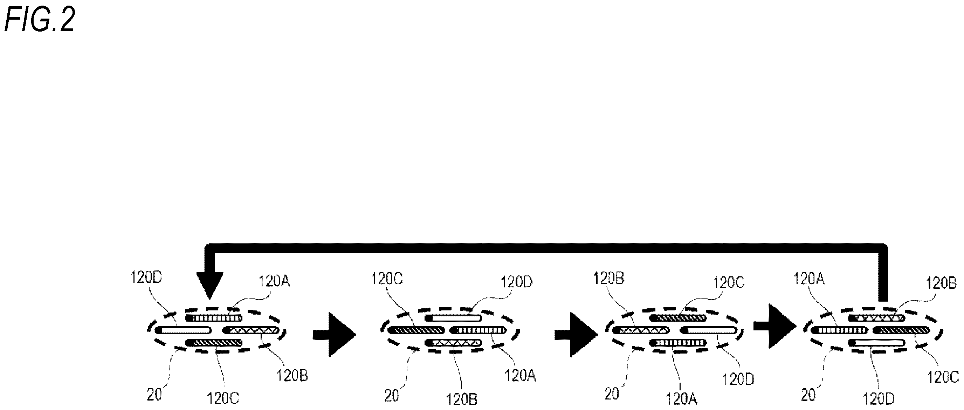

For example, with respect to the twelve optical fiber ribbons 120, the optical fiber ribbons 120 are stranded with each other in a right strand. Then, the optical fiber ribbons 120 are stranded, while being untwisted in a left strand which is an opposite direction to the right strand, that is, being twisted in the opposite direction. In the present example, the expression "untwisted" means that each optical fiber ribbon is twisted in a direction in which the twist of each optical fiber ribbon occurring when the optical fiber ribbons are stranded with each other is cancelled. For example, when the primary unit 20 is configured with four optical fiber ribbons 120A to 120D, as illustrated in a schematic view of Fig. 2, the optical fiber ribbons 120A to 120D are untwisted in the primary units 20 to be stranded.

The twelve stranded optical fiber ribbons 120 may be bundled by a bundle member 25 for identification formed of a resin tape such as polyester. The optical fiber ribbons 120 may be collected in an SZ-shaped strand as in a spiral shape in which the strand direction is periodically reversed.

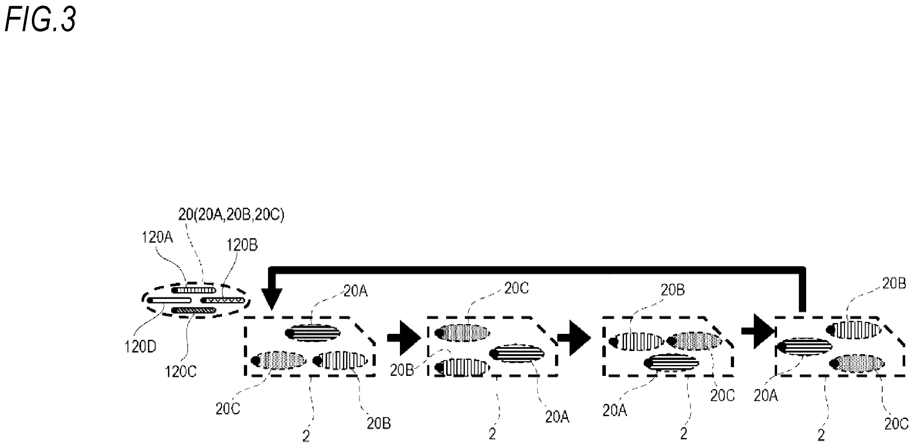

As illustrated in a schematic view of Fig. 3, the three primary units 20A to 20C included in the secondary units 2 are stranded in a spiral shape of one direction, while the primary units 20 (20A to 20C) are not twisted in the longitudinal direction of the optical fiber cable 1A.

In the same manner as in the case of the twelve optical fiber ribbons 120, the three primary units 20A to 20C are also stranded while being untwisted. That is, the primary units 20A to 20C are stranded while being twisted in a direction in which the twist of each of the primary units 20A to 20C occurring when the primary units 20 (20A to 20C) are stranded with each other is cancelled.

The three stranded primary units 20A to 20C may be bundled by a bundle member in the same manner as the above. The primary units 20 (20A to 20C) may be collected in an SZ-shaped strand as in a spiral shape in which the strand direction is periodically reversed.

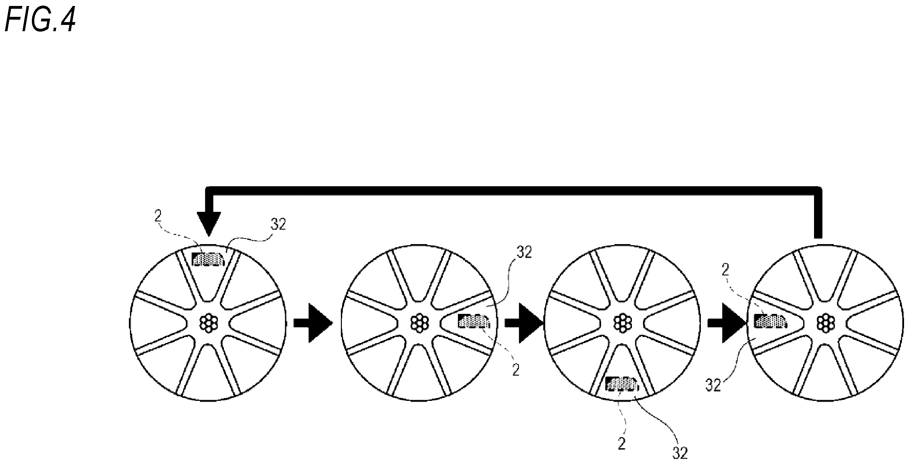

As illustrated in a schematic view of Fig. 4, the secondary unit 2 is stored in the slot groove 32, for example, in a state of being untwisted stranding with respect to the slot groove 32 formed in a spiral shape, in the longitudinal direction of the optical fiber cable 1A. That is, the secondary unit 2 is stored in the slot groove 32 while being twisted in a direction in which the twist of the secondary unit 2 occurring when being stored in the slot groove 32 is cancelled. In Fig. 4, in order to simplify the description, only the secondary unit 2 in one slot groove 32 is illustrated, but the secondary units 2 are stored in the other slot grooves 32.

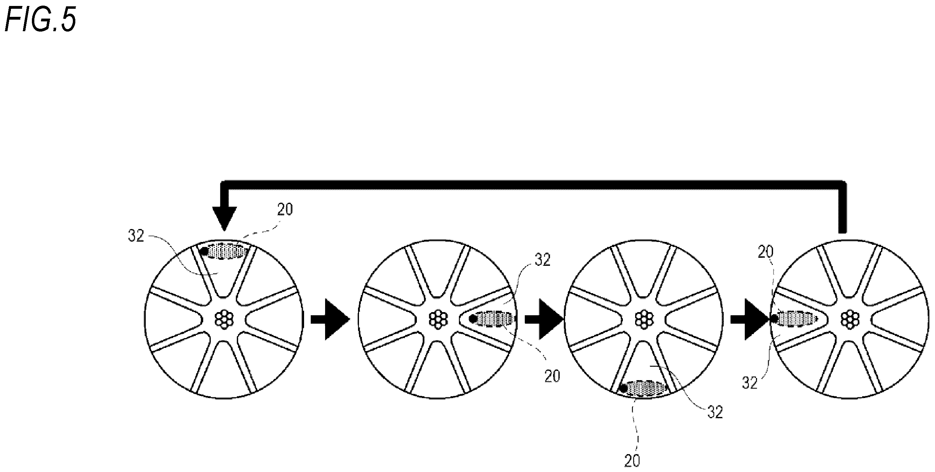

In the present example, the secondary units 2 formed with three primary units are stored in each slot groove 32, but the present disclosure is not limited to this configuration. For example, as illustrated in a schematic view of Fig. 5, one primary unit 20 may be stored in each of the slot grooves 32 (in Fig. 5, in order to simplify the description, only the secondary unit 2 (the primary unit 20) in one slot groove 32 is illustrated). In each of the slot grooves 32, a tertiary unit obtained by stranding a plurality of secondary units may be stored.

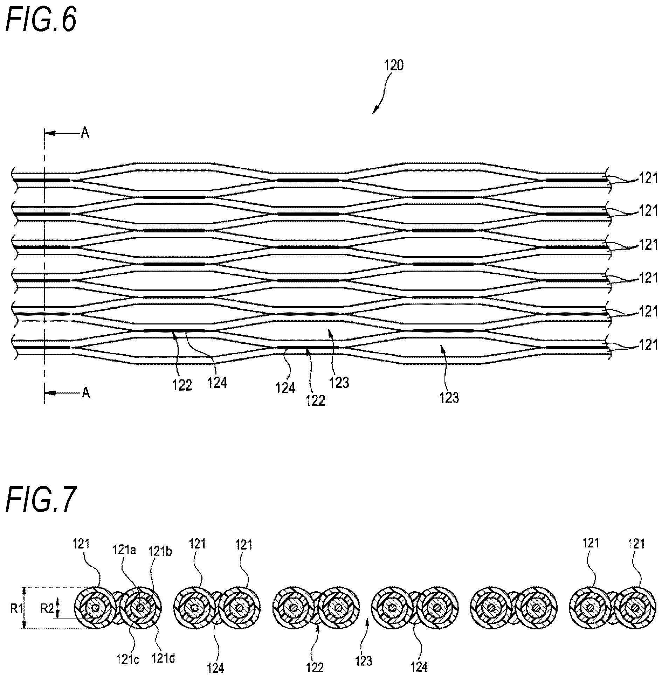

As illustrated in Figs. 6 and 7, the optical fiber ribbon 120 may be an intermittent connection type optical fiber ribbon. In the optical fiber ribbon 120, in a state in which a plurality (twelve in the present example) of optical fibers 121 are arranged in parallel, connecting portions 122 in which the adjacent optical fibers 121 are connected to each other and non-connecting portions 123 in which the adjacent optical fibers 121 are not connected to each other are intermittently provided in the longitudinal direction. In Fig. 6, the intermittent connection type optical fiber ribbon 120 in a state in which the optical fibers 121 are open in the arrangement direction is illustrated. Portions in which the connecting portions 122 and the non-connecting portions 123 are intermittently provided may be between a part of the optical fibers or may be between all of the optical fibers.

For example, the optical fiber ribbons 120 are manufactured by intermittently applying connecting resins 124 such as an ultraviolet curing resin or a thermosetting resin to portions between the optical fibers so that the connecting portions 122 and the non-connecting portions 123 are intermittently formed. All of the optical fibers 121 are connected by applying the connecting resins 124 to the plurality of optical fibers 121. Subsequently, a portion of the connecting resins 124 is cleaved by a rotary blade or the like to form the non-connecting portions 123. In this manner, the intermittent connection type optical fiber ribbons 120 may be manufactured.

As illustrated in Fig. 7, for example, the optical fiber 121 includes glass fibers configured with cores 121a and clads 121b and two coating layers (inner coating layers 121c and outer coating layers 121d) that cover the glass fibers. The coating layers 121c and 121d are formed, for example, of an ultraviolet curable resin. An outer diameter R1 of the optical fiber 121 is, for example, 125 µm to 190 µm. An outer diameter R2 of the clads 121b (glass fiber) is, for example, 80 µm to 120 µm. When the optical fiber 121 is wound with a tension of 8 N around a bobbin obtained by winding sandpaper having a grain size of 240 (#240) on a body surface having a body diameter of 280 mm, an increase in light loss caused by microbending is 5 dB/km or less.

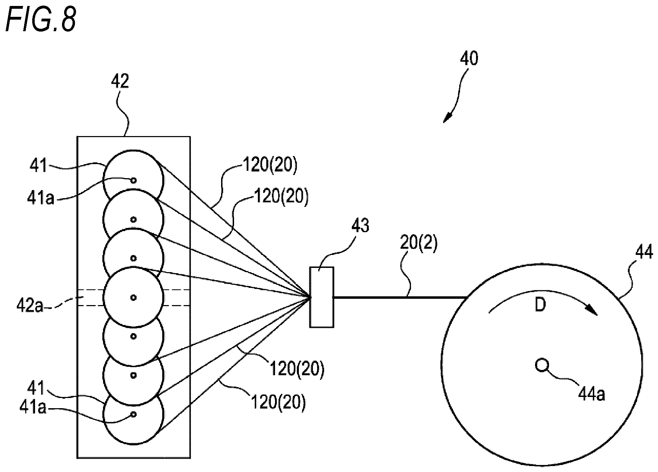

Subsequently, two examples for a mechanism for manufacturing an optical fiber unit are described with reference to Figs. 8 to 11.

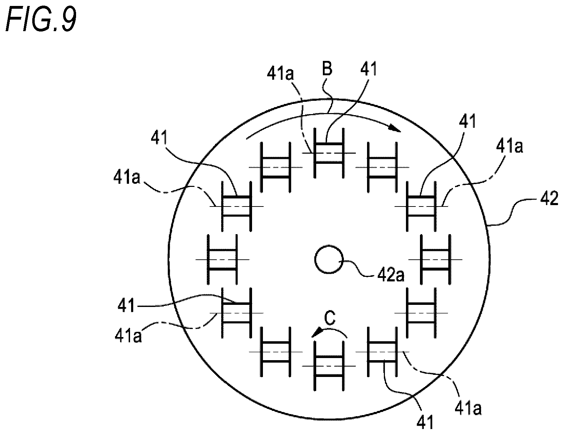

Fig. 8 illustrates a manufacturing mechanism 40 having a configuration (a cage rotating type) in which a cage 42 accommodating supply bobbins 41 rotates when an optical fiber unit is manufactured. Fig. 9 illustrates a schematic view of the cage 42 viewed from the front side (the right side in Fig. 8). The manufacturing mechanism 40 can manufacture the primary units 20, for example, by stranding the optical fiber ribbons 120. The manufacturing mechanism 40 can manufacture the secondary units 2, for example, by stranding the primary units 20.

First, a case where the primary units 20 are manufactured by using the manufacturing mechanism 40 is described.

As illustrated in Fig. 8, the manufacturing mechanism 40 includes the supply bobbins 41 that send out the optical fiber ribbons 120 and the cage 42 to which the supply bobbins 41 are attached. The manufacturing mechanism 40 includes a gathering plate 43 that arranges the sent optical fiber ribbons 120 to a predetermined position and a winding-up drum 44 that winds the manufactured primary units 20.

As illustrated in Figs. 8 and 9, the plurality (twelve in the present example) of supply bobbins 41 are annularly attached to the cage 42 in a coaxial shape with a rotation shaft 42a of the cage 42. The number of the attached supply bobbins 41 corresponds to the number of the optical fiber ribbons 120 included in the primary units 20. Each of the supply bobbins 41 rotates about each rotation shaft 41a and sends out the optical fiber ribbons 120 wound around the supply bobbins 41 to the gathering plate 43.

As illustrated in Fig. 9, the cage 42 rotates (clockwise rotate) about the rotation shaft 42a of the cage 42 in an arrow B direction according to the sending of the optical fiber ribbons 120 by the supply bobbins 41. With respect to the optical fiber ribbons 120 sent from the supply bobbins 41, the optical fiber ribbons 120 are stranded with each other in a spiral shape in one direction by this rotation of the cage 42. The cage 42 rotates at a predetermined speed according to the winding-up speed of the winding-up drum 44 so that a strand pitch of the stranded optical fiber ribbons 120 becomes a predetermined pitch.

As illustrated in Fig. 9, the supply bobbins 41 rotate (counterclockwise rotates) to the cage 42 in an arrow C direction according to the rotation of the cage 42 in the arrow B direction so that the direction of the rotation shafts 41a of the supply bobbins 41 is maintained in a constant direction (a horizontal direction in the present example). That is, the supply bobbins 41 rotate on the cage 42 in a direction (the arrow C direction) opposite to the rotation direction (the arrow B direction) of the cage 42 so that the supply bobbins 41 always face the same direction. The optical fiber ribbons 120 during the stranding are untwisted by the rotation of the supply bobbins 41, and are stranded without the twist of the optical fiber ribbons 120. The maintained direction of the rotation shafts 41a of the supply bobbins 41 is not limited to the horizontal direction, and may be maintained in another angle.

The manufactured primary units 20 are wound around the winding-up drum 44 that rotates about a rotation shaft 44a in an arrow D direction.

Subsequently, a case where the secondary units 2 are manufactured by using the manufacturing mechanism 40 is described.

In Fig. 8, when the secondary units 2 are manufactured, the supply bobbins 41 by the number (three in the present example) corresponding to the number of the primary units 20 included in the secondary unit 2 are attached to the cage 42. The supply bobbins 41 rotate about the rotation shafts 41a and send out the primary units 20 wound around the supply bobbins 41 to the gathering plate 43.

The cage 42 rotates in the arrow B direction as in a case where the primary units 20 are manufactured according to the sending of the primary units 20. According to this rotation, the primary units 20 are stranded with each other in a spiral shape in one direction. The cage 42 rotates at a predetermined speed as the above. As in a case where the primary units 20 are manufactured, the supply bobbins 41 rotate in a direction opposite to the rotation direction of the cage 42 so that the direction of the rotation shafts 41a is maintained in a constant direction. According to this rotation, the primary units 20 are respectively untwisted and stranded. Also, the manufactured secondary units 2 are wound around the winding-up drum 44 as in the above. When tertiary units are manufactured, secondary units may be attached instead of the primary units, and thus the detailed description thereof is not provided.

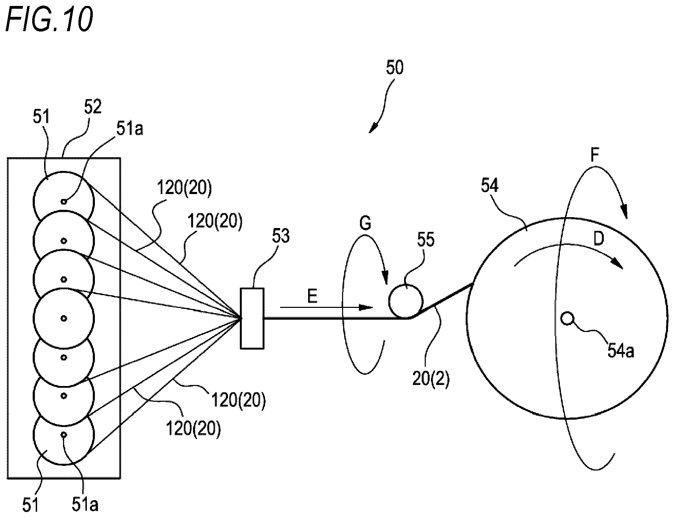

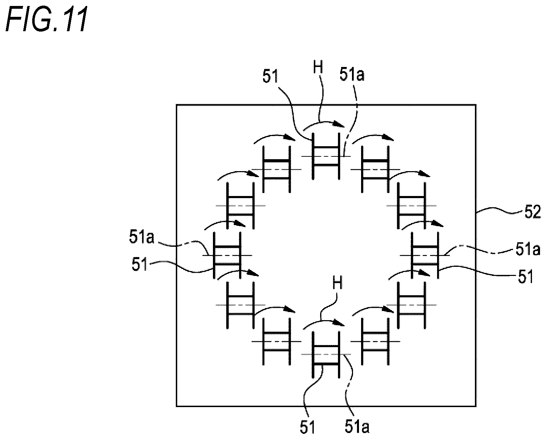

Fig. 10 illustrates a manufacturing mechanism 50 having a configuration (winding rotation type) in which a winding-up drum 54 rotates when the optical fiber units are manufactured. Fig. 11 illustrates a schematic view of a cage 52 viewed from the front side (a right side in Fig. 10). As in the manufacturing mechanism 40, the manufacturing mechanism 50 can manufacture the primary units 20 by stranding the optical fiber ribbons 120 and can manufacture the secondary units 2 by stranding the primary units 20.

First, a case where the primary units 20 are manufactured by using the manufacturing mechanism 50 is described.

As illustrated in Fig. 10, the manufacturing mechanism 50 includes supply bobbins 51, the cage 52, a gathering plate 53, and the winding-up drum 54. This configuration is the same configuration as the manufacturing mechanism 40. The manufacturing mechanism 50 includes a guide roller 55 that guides the manufactured primary units 20 to the winding-up drum 54.

As illustrated in Figs. 10 and 11, as in the manufacturing mechanism 40, the supply bobbins 51 are attached to the cage 52 by the number corresponding to the number of the optical fiber ribbons 120 included in the primary units 20. The supply bobbins 51 rotate about rotation shafts 51a and send out the optical fiber ribbons 120 wound around the supply bobbins 51 to the gathering plate 53.

With respect to the optical fiber ribbons 120 arranged in a predetermined position by the gathering plate 53, the optical fiber ribbons 120 are stranded with each other in a spiral shape in one direction by the rotation of the winding-up drum 54. Together with the rotation about a rotation shaft 54a in the arrow D direction, the winding-up drum 54 rotates about an axis of an arrow E direction which is a pass line direction of the primary units 20 in an arrow F direction. By this rotation of the winding-up drum 54 in the arrow F direction, the optical fiber ribbons 120 rotate in an arrow G direction in synchronization with the rotation of the winding-up drum 54. Accordingly, the optical fiber ribbons 120 are stranded with each other in a spiral shape in one direction.

In synchronization with the rotation of the winding-up drum 54 in the arrow F direction, the supply bobbins 51 rotate in the same direction as the rotation direction (the arrow F direction) of the winding-up drum 54 toward the winding-up drum 54. That is, as illustrated in Fig. 11, the supply bobbins 51 rotate in a direction (an arrow H direction) in which the direction of each of the rotation shafts 51a of the supply bobbins 51 in the cage 52 changes. In this case, the cage 52 does not rotate. The supply bobbins 51 rotate about the rotation shafts 51a while rotating in the arrow H direction and send out the optical fiber ribbons 120. By this rotation of the supply bobbins 51 in the arrow H direction, each of the optical fiber ribbons 120 during the stranding is untwisted. Accordingly, the optical fiber ribbons 120 are stranded without the twist.

Subsequently, a case where the secondary units 2 are manufactured by using the manufacturing mechanism 50 is described.

In Fig. 10, when the secondary units 2 are manufactured, the supply bobbins 51 by the number corresponding to the number of the primary units 20 included in the secondary units 2 are attached to the cage 52. The supply bobbins 51 rotate about the rotation shafts 51a and send out the primary units 20 wound about the supply bobbins 51 to the gathering plate 53.

As in a case where the primary units 20 are manufactured, together with the rotation in the arrow D direction, the winding-up drum 54 rotates in the arrow F direction. By the rotation of the winding-up drum 54 in the arrow F direction, the optical fiber ribbons 120 are stranded in the spiral shape in one direction. As in a case where the primary units 20 are manufactured, the supply bobbins 51 rotate in the same direction as the rotation direction of the winding-up drum 54, in synchronization with the rotation of the winding-up drum 54. By this rotation, the primary units 20 are untwisted and stranded. When the tertiary units are manufactured, secondary units may be attached instead of the primary units, and thus the detailed description thereof is not provided.

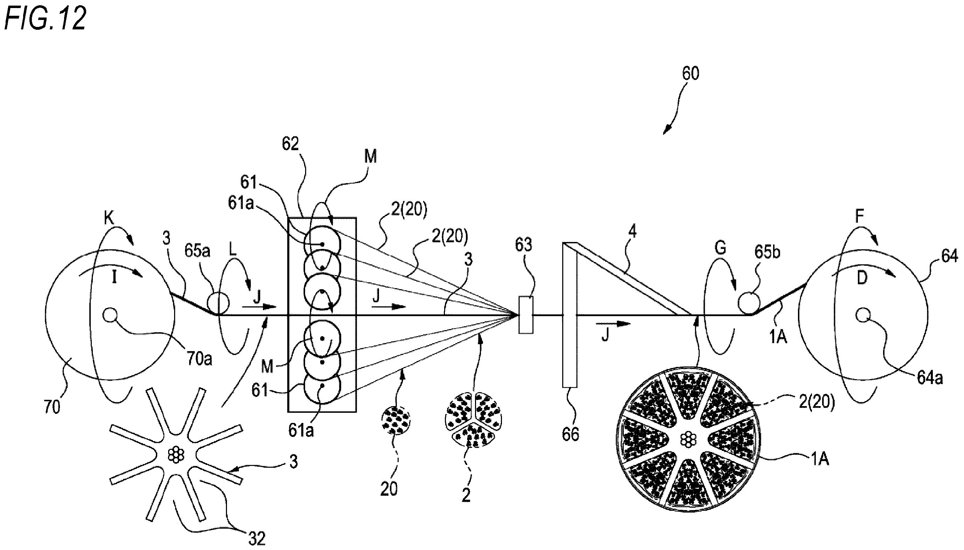

Subsequently, an example of an apparatus for manufacturing the optical fiber cable 1A is described with reference to Fig. 12.

As illustrated in Fig. 12, a manufacturing apparatus 60 of the optical fiber cable 1A includes a supply drum 70 that sends out the slot rod 3, a cage 62, supply bobbins 61 accommodated in the cage 62, a gathering plate 63, a tape supply 66, and a winding-up drum 64.

Together with the rotation about a rotation shaft 70a in an arrow I direction, the supply drum 70 rotates in an arrow K direction about an arrow J direction which is a pass line direction of the slot rod 3. By the rotation in the arrow I direction, the supply drum 70 sends out the slot rod 3 toward a guide roller 65a. By the rotation of the supply drum 70 in the arrow K direction, the sent slot rod 3 rotates in an arrow L direction in synchronization with the rotation of the supply drum 70. The rotation speed of the supply drum 70 in the arrow K direction is controlled to a predetermined speed according to the speed of sending out the slot rod 3. According to the rotation of the supply drum 70, the slot rod 3 rotates at a predetermined speed in the arrow L direction. Accordingly, the slot grooves 32 of the slot rod 3 formed in a spiral shape are sent out to be always at the same position in the circumferential direction of the slot rod 3, at the position of the gathering plate 63.

The supply bobbins 61 by the number (eight in the present example) corresponding to the number of the slot grooves 32 formed in the slot rod 3 are attached to the cage 62. In the present example, the secondary units 2 manufactured by the manufacturing mechanism of Fig. 8 or 10 are wound around the supply bobbins 61. The supply bobbins 61 rotate about the rotation shafts 61a and send out the secondary units 2 to the gathering plate 63.

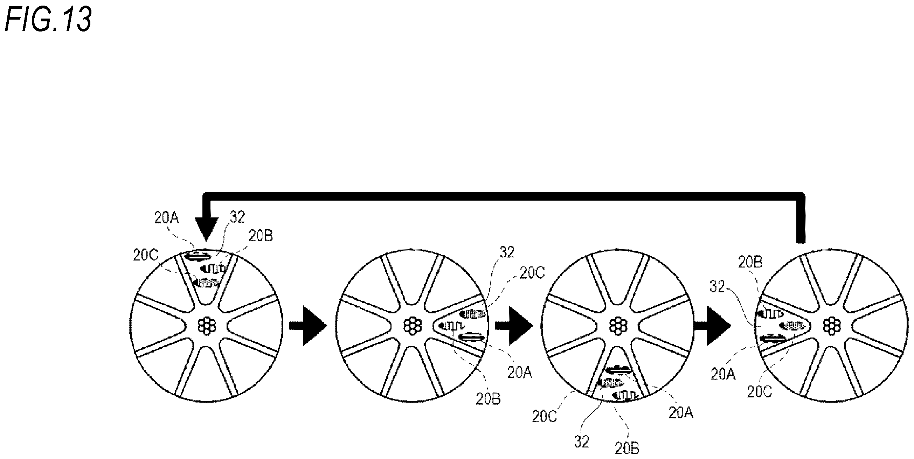

The secondary units 2 arranged in a predetermined position by the gathering plate 63 are stored in the slot grooves 32 of the slot rod 3. In this case, in synchronization with the rotation of the slot rod 3 in the arrow L direction, the supply bobbins 61 rotate in the same direction (an arrow M direction) as the rotation direction (the arrow L direction) of the slot rod 3 on the cage 62. By this rotation of the supply bobbins 61, the secondary units 2 stored in the slot grooves 32 are not twisted and stored in the slot grooves 32 without the twist of the secondary units 2. The primary units 20 (the three primary units 20A to 20C in the present example) included in the stored secondary units 2 are stranded with each other. Therefore, as illustrated in a schematic view of Fig. 13, the primary units are stored while the positions in the slot grooves 32 are changed (for example, positioned on the bottom side or positioned on the upper side of the slot grooves 32) (in Fig. 13, the primary units 20A to 20C in one slot groove 32 are only illustrated for description).

The outer periphery of the slot rod 3 in which the secondary units 2 are stored is press-wrapped by the press-wrapping tape 4 sent out from the tape supply 66. The optical fiber cable 1A in a state of being wrapped with the press-wrapping tape 4 is sent toward the winding-up drum 64 via a guide roller 65b and wound around the winding-up drum 64. In this case, the winding-up drum 64 rotates in the arrow F direction which is the same direction as the arrow K direction of the supply drum 70 in synchronization with the rotation of the supply drum 70. By this rotation of the winding-up drum 64 in the arrow F direction, the optical fiber cable 1A wound around the winding-up drum 64 rotates in the same direction (the arrow G direction) as the rotation direction (the arrow L direction) of the slot rod 3 sent out from the supply drum 70. Therefore, the optical fiber cable 1A is wound around the winding-up drum 64 without being twisted.

The present example is not limited to this configuration in which the secondary units 2 formed with three primary units are stored in each of the slot grooves 32. For example, one primary unit 20 may be accommodated in each of the slot grooves 32. In this case, the primary units 20 are wound around each of the supply bobbins 61 of the cage 62, and the primary units 20 sent out from the supply bobbins 61 are stored in the slot grooves 32 as in the secondary units 2. Tertiary units formed with a plurality of secondary units may be stored.

According to the optical fiber cable 1A as described above, the secondary units 2 are stranded in the longitudinal direction of the optical fiber cable 1A in a state in which the primary units 20 are not twisted. Therefore, it is possible to prevent the primary units 20 from being crossed with each other and twisted. The primary units 20 are stranded in the longitudinal direction of the optical fiber cable 1A, in a state in which the optical fiber ribbons 120 are not twisted. Therefore, it is possible to prevent the optical fiber ribbons 120 from being crossed with each other and twisted. Accordingly, the optical fibers 121 that configure the optical fiber ribbons 120 do not twist and distort. Accordingly, the stranded optical fibers 121 do not outwardly spread and deterioration of the transmission characteristics and a fiber break can be suppressed.

Since the secondary units 2 are stored in the slot grooves 32 formed in a spiral shape in a state of being untwisted, the secondary units 2 are not twisted. Therefore, the repulsive force that outwardly spread the stored secondary units 2 is not generated. Even when the slot grooves 32 are not deepened, there is no concern of releasing the secondary units 2 from the slot grooves 32. For example, there is no concern that a portion of the secondary units 2 is interposed with the press-wrapping tape 4. Accordingly, the deterioration of the transmission characteristics and the fiber break of the optical fibers 121 can be suppressed, and also the outer diameter of the optical fiber cable 1A can be reduced. Further, the yield in the process of manufacturing the optical fiber cable 1A increases, and thus the manufacturing cost can be reduced.

When the intermittent connection type optical fiber ribbons 120 are stored in the slot grooves 32, the shape thereof in the slot groove cross section can be freely changed. Therefore, the space in the slot grooves 32 can be efficiently used. Accordingly, the density of the optical fiber cable 1A can be made higher than when the optical fiber ribbons 120 are not the intermittent connection type.

By reducing the outer diameter R1 of the optical fibers 121 to be finer than that of general optical fibers (outer diameter of 250 µm), the optical fibers 121 can be stored in the optical fiber cable 1A with high density. However, in this case, when the optical fibers 121 are thinly covered, the deterioration of the transmission characteristics or the fiber break of the optical fiber cable 1A easily occurs due to the adhesion of foreign matters. By reducing the outer diameter R2 of the clads 121b, the diameter of the optical fibers 121 can be reduced while the coating thickness is secured. The optical fibers 121 can be stored in the optical fiber cable 1A with high density.

When the diameters of the optical fibers 121 are reduced, the optical fibers 121 in the optical fiber cable 1A are easily bent, and thus the transmission characteristics are easily deteriorated. On the other hand, since the optical fibers 121 of the present example have microbend loss resistance described above, while the deterioration of the transmission characteristics is suppressed, the optical fiber cable 1A with high density can be realized.

### (Second embodiment)

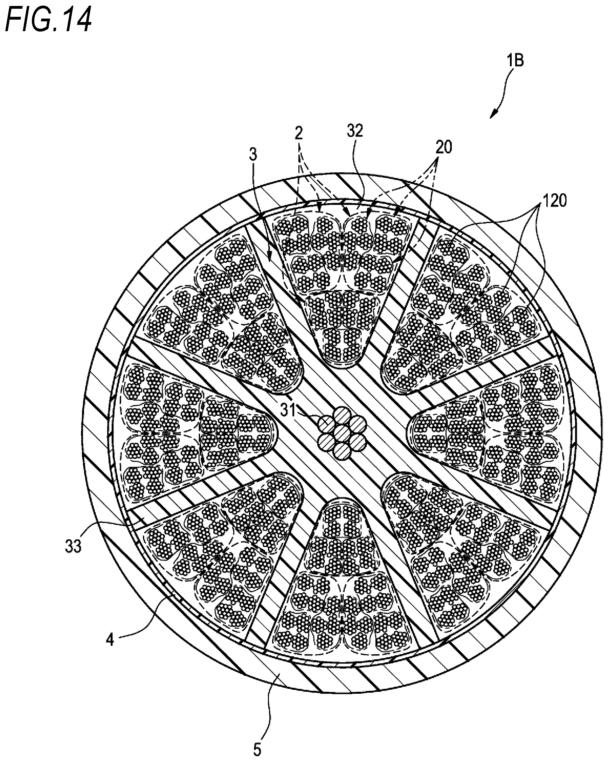

Fig. 14 is a cross-sectional view illustrating an example of an optical fiber cable according to the second embodiment. As illustrated in Fig. 14, with respect to an optical fiber cable 1B according to the second embodiment, a plurality (three in the present example) of secondary units (optical fiber units) 2 are stored in each of the slot grooves 32. In this point, the optical fiber cable 1B according to the second embodiment is different from the optical fiber cable 1A according to the first embodiment in which one secondary unit 2 is stored in each of the slot grooves 32. Configurations which are the same as in the optical fiber cable 1A according to the first embodiment are denoted by the same reference numerals, and the descriptions thereof are omitted.

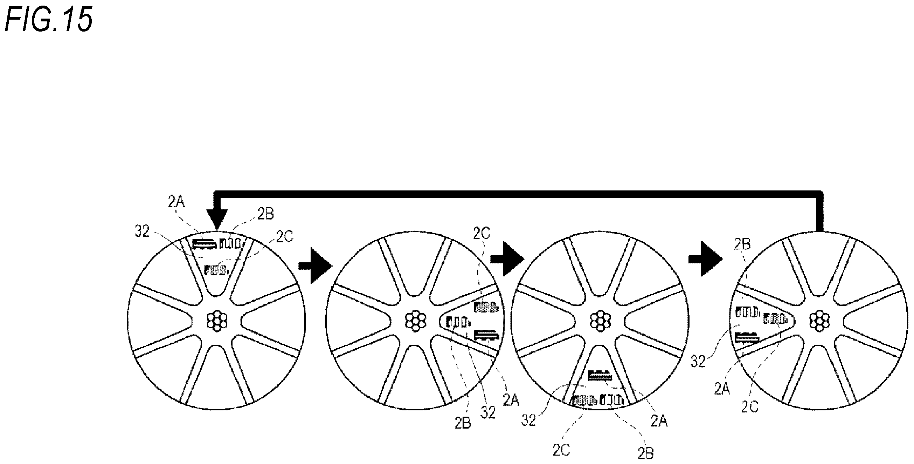

As illustrated in a schematic view of Fig. 15, for example, with respect to the three secondary units 2 stored in the slot grooves 32, the secondary units 2 (2A to 2C) are stranded with each other in the longitudinal direction of the optical fiber cable 1B. Accordingly, while the secondary units are stored while the positions in the slot grooves 32 are changed (for example, positioned on the bottom side or positioned on the upper side of the slot grooves 32) (in Fig. 15, the secondary units 2A to 2C in one slot groove 32 are only illustrated for description).

The three secondary units 2 stored in the slot grooves 32 are stranded with each other and stored in the slot grooves 32 in the longitudinal direction of the optical fiber cable 1B, while the strand direction of the secondary units 2 is periodically changed (for example, the S strand and the Z strand are alternately repeated).

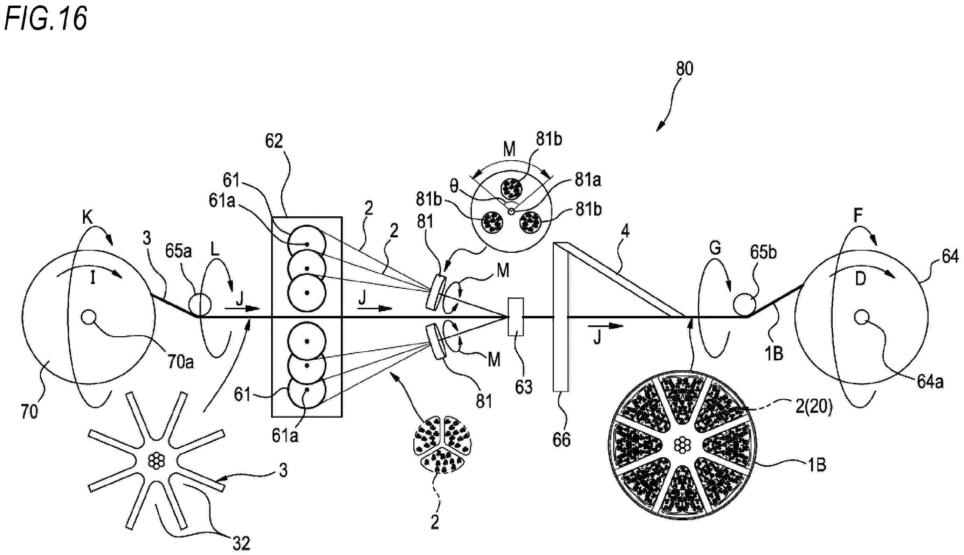

Next, an example of an apparatus for manufacturing the optical fiber cable 1B is described with reference to Fig. 16.

As illustrated in Fig. 16, in addition to the configurations included in the manufacturing apparatus 60 (with reference to Fig. 12) of the first embodiment, a manufacturing apparatus 80 of the optical fiber cable 1B includes twistable tables 81 in which the strand direction of the optical fiber units 2 can be periodically changed. The same configurations as in the manufacturing apparatus 60 are denoted by the same reference numerals, and the descriptions thereof are omitted.

The supply bobbins 61 by the number obtained by multiplying the number (eight in the present example) of the slot grooves 32 formed in the slot rod 3 and the number (three in the present example) of the secondary units 2 stored in one slot groove 32 are attached to the cage 62. That is, 24 (8 × 3) supply bobbins 61 are attached to the cage 62. In the present example, the secondary units 2 manufactured by the manufacturing mechanism of Fig. 8 or 10 are wound around the supply bobbins 61. The supply bobbins 61 rotate about the rotation shafts 61a and send out the secondary units 2 to the twistable tables 81.

A plurality of holes 81b through which the sent secondary units 2 can pass are formed in the twistable table 81. The holes 81b are annularly formed in a coaxial shape with a rotation shaft 81a of the twistable table. The holes 81b are formed to correspond to the number of the stranded secondary units 2. The three holes 81b are formed in the twistable table 81 of the present example. The twistable tables 81 are provided by the number (eight in the present example) which is the same as the number of the slot grooves 32 formed in the slot rod 3.

The twistable table 81 rotates about the rotation shaft 81a while repeating the reversal of the range of an angle θ (θ = 90° in the present example) indicated by the arrow M to the both direction of the arrow M. By this rotation of the twistable table 81, the three secondary units 2 that pass through the twistable table 81 are stranded with each other while the strand direction is periodically changed, that is, are SZ-stranded and stored in the slot grooves 32. By being stranded with each other, the three secondary units 2 are stored while the positions in the slot grooves 32 are changed.

According to the optical fiber cable 1B as described above, one slot groove 32 can store the plurality of secondary units 2. Therefore, a larger number of optical fiber ribbons 120 can be stored in each of the slot grooves 32, and thus it is advantageous to reduce the diameter of the optical fiber cable 1B.

The plurality of secondary units 2 stored in the same slot groove 32 are stored in the longitudinal direction of the optical fiber cable 1B while positions are switched with each other in the slot grooves 32.

When the position of optical fiber unit in the slot groove is not changed, a unit on the upper side of the slot groove is stored while drawing a longer trajectory than a unit on the bottom side of the slot groove, and thus is required to be formed to be longer than the optical fiber unit on the bottom side. For this purpose, it is required that the optical fiber unit of which the length is changed according to the position (the upper side, the bottom side, or the like) in the slot groove is prepared in advance and arranged in a position therefor in an assembly (storing in the slot groove) process, and thus the manufacturing process becomes complicated. Also, there is a concern that a discard loss of discarding the optical fiber unit for the extra length is generated.

Therefore, by storing the secondary units 2 with the positions thereof switched as in the optical fiber cable 1B, the length thereof can be equalized, so that the above phenomenon does not occur. Accordingly, the manufacturing process can be prevented from being complicated, the generation of the discard loss of the secondary units 2 can be prevented, and thus the reduction in the manufacturing cost can be achieved.

By using the twistable tables 81, the secondary units 2 are stranded with each other and stored in the slot grooves 32 while the strand directions of the secondary units 2 are periodically changed. Therefore, even when the cage 62 accommodating a large number (24 in the present example) of supply bobbins 61 is not rotated, the secondary units 2 can be stranded by reversing and rotating the twistable tables 81. Accordingly, even when a cable including a large number of the accommodating optical fiber ribbons 120 is manufactured, it is possible to prevent the increase in the size of the manufacturing apparatus 80, and thus the reduction of the manufacturing cost can be achieved.

In the above, the present disclosure is described specifically with reference to specific embodiments, but it will be apparent to those skilled in the art that various changes and modifications can be made without departing from the spirit and scope of the present disclosure. The number, position, shape, and the like of the configuration members described above are not limited to the above embodiment and can be changed to numbers, positions, shapes, and the like suitable for implementing the present disclosure.

### REFERENCE SIGNS LIST

1A, 1B: optical fiber cable
2: optical fiber unit (secondary unit)
3: slot rod
20: primary unit
31: tensile strength member
32: slot groove
40, 50: manufacturing mechanism
41, 51, 61: supply bobbin
42, 52, 62: cage
43, 53, 63: gathering plate
44, 54, 64: winding-up drum
60, 80: manufacturing apparatus
70: supply drum
81: twistable table
120: optical fiber ribbon
121: optical fiber
121a: core
121b: clad
122: connecting portion
123: non-connecting portion

## Claims

1. An optical fiber cable comprising:
optical fiber units obtained by collecting a plurality of optical fiber ribbons in which a plurality of optical fibers are arranged in parallel; and
a slot rod including a plurality of slot grooves formed in a spiral shape in order to store the optical fiber units,
wherein the optical fiber units are stranded in a longitudinal direction of the optical fiber cable in a state in which the optical fiber ribbons are not twisted, and
the optical fiber units are stored in the longitudinal direction of the optical fiber cable in a state of being untwisted stranding in the slot grooves.

2. The optical fiber cable according to claim 1,
wherein the optical fiber units are configured with secondary units obtained by collecting a plurality of primary units obtained by collecting the plurality of optical fiber ribbons,
wherein the primary units are stranded in the longitudinal direction of the optical fiber cable in a state in which the optical fiber ribbons are not twisted, and
the secondary units are stranded in the longitudinal direction of the optical fiber cable in a state in which the plurality of primary units are not twisted.

3. The optical fiber cable according to claim 1 or 2,
wherein a plurality of optical fiber units are stored in the slot grooves.

4. The optical fiber cable according to claim 3,
wherein the plurality of optical fiber units stored in the slot grooves are stored in the longitudinal direction of the optical fiber cable while positions in the slot grooves are changed.

5. The optical fiber cable according to claim 4,
wherein the plurality of optical fiber units stored in the slot grooves are stranded and stored in the slot grooves in the longitudinal direction of the optical fiber cable, while a strand direction is periodically changed.

6. The optical fiber cable according to any one of claims 1 to 5,
wherein the optical fiber ribbons are intermittent connection type optical fiber ribbons in which connecting portions in which the adjacent optical fibers are connected to each other and non-connecting portions in which the adjacent optical fibers are not connected to each other are provided intermittently in the longitudinal direction among some or all of the optical fibers in a state in which the plurality of optical fibers are arranged in parallel.

7. The optical fiber cable according to any one of claims 1 to 6,
wherein an outer diameter of the optical fiber is 125 µm to 190 µm.

8. The optical fiber cable according to any one of claims 1 to 7,
wherein an outer diameter of a clad of the optical fiber is 80 µm to 120 µm.

9. The optical fiber cable according to any one of claims 1 to 8,
wherein, when the optical fibers are wound with a tension of 8 N around a bobbin obtained by winding sandpaper of #240 on a body surface having a body diameter of 280 mm, an increase in loss is 5 dB/km or less.
